# EUROPEAN PATENT SPECIFICATION

(11) **EP 2 975 483 B1**
(45) Date of publication and mention of the grant of the patent: **26.02.2020**
(21) Application number: 13877811.3
(22) Date of filing: 05.11.2013
(51) Int. Cl.: G05D 1/12

(54) **TARGET POINTING APPARATUS, TARGET POINTING CONTROL METHOD, TARGET POINTING CONTROL PROGRAM**
ZIELANZEIGEVORRICHTUNG, ZIELANZEIGESTEUERUNGSVERFAHREN UND ZIELANZEIGESTEUERUNGSPROGRAMM
APPAREIL DE POINTAGE DE CIBLE, PROCÉDÉ DE COMMANDE DE POINTAGE DE CIBLE, PROGRAMME DE COMMANDE DE POINTAGE DE CIBLE

(30) Priority: 15.03.2013 JP 2013053808
(43) Date of publication of application: 20.01.2016
(73) Proprietor: NEC Corporation, Tokyo 108-8001 (JP)
(72) Inventor: SHIMIZU, Motoaki, Tokyo 108-8001 (JP)
(74) Representative: Vossius & Partner Patentanwälte Rechtsanwälte mbB
(86) International application number: PCT/JP2013/006503
(87) International publication number: WO 2014/141334

(56) References cited:
- JP-A- H06 105 189
- JP-A- 2001 142 538
- JP-U- H0 579 299
- US-A- 5 203 220
- US-A1- 2003 034 928
- US-B1- 6 609 037

## Description

### Technical Field

The present invention relates to a target pointing apparatus. For example, the present invention relates to a target pointing apparatus that generates a target trajectory and controls an object to be controlled (hereinafter also referred to as "controlled object") so that the controlled object follows the target trajectory.

### Background Art

Patent Literature 1 discloses a target pointing apparatus.

There is an apparatus that is identical to this disclosed target pointing apparatus except that the inertia sensor, the integrator, and the subtracter are removed.

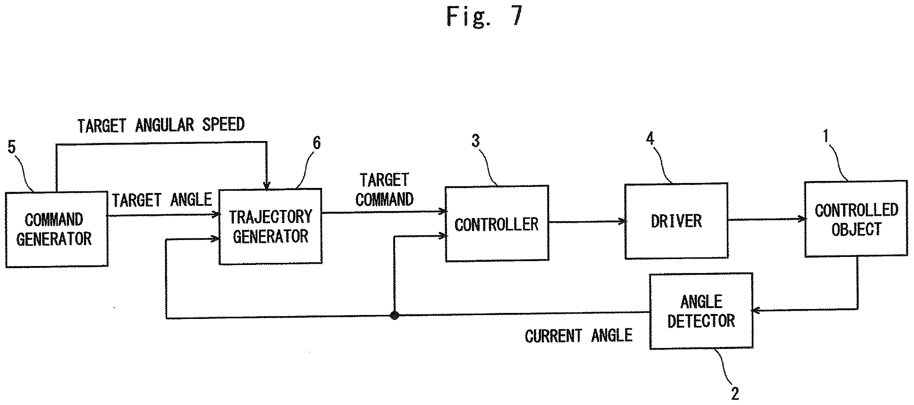

Fig. 7 shows a block diagram showing a target pointing apparatus according to this related art.

The target pointing apparatus includes:
a fixing section (not shown) for attaching the whole apparatus to a vehicle;
a controlled object 1 rotatably disposed in the fixing section;
an angle detector 2;
a command generator 5;
a trajectory generator 6;
a controller 3; and
a driver 4.

The angle detector 2 detects a relative angle of the controlled object with respect to the fixing section from moment to moment.

The angle detector 2 feeds back the detected angle value to the trajectory generator 6 and the controller 3 as a current angle signal.

The command generator 5 outputs a target angle signal and a target angular speed signal to the trajectory generator 6.

For example, when it is desired to track (i.e., follow) a moving object such as a satellite and an airplane, the target angle signal and the target angular speed signal mean an angle and an angular speed that the controlled object 1 should have for this tracking operation.

The trajectory generator 6 generates a target command based on the target angle signal, and the current angle signal, and outputs the generated target command to the controller 3.

It should be noted that, needless to say, even when the target angle signal and the target angular speed signal are directly supplied from the command generator 5 to the controller 3 without interposing the trajectory generator 6 therebetween, the controlled object 1 can perform an operation according to the target angle and the target angular speed.

However, the command generator 5 does not take the current state of the controlled object 1 (such as an angular position and an angular speed of the controlled object 1) into account when the command generator 5 outputs the target angle signal and the target angular speed signal.

Therefore, when the target angle and the target angular speed are widely deviated from the current state of the controlled object 1, the controlled object 1 could perform a sudden movement and/or a discontinuous movement.

Further, the target angle and the target angular speed could be changed before the controlled object 1 reaches the target angle and the target angular speed.

In this case, the controlled object 1 could also perform a sudden movement and/or a discontinuous movement.

Therefore, the trajectory generator 6 calculates a trajectory along which the controlled object 1 can smoothly reach the target angle signal and the target angular speed from the current state of the controlled object 1, such as the current angular position of the controlled object 1, while taking the current state of the controlled object into account.

Then, the trajectory generator 6 outputs a target command according to this trajectory.

The target command includes a target angle command and a target angular speed command.

The controller 3 performs a phase correction or the like based on the target command and the current angle signal and then outputs a control signal to the driver 4.

The controller 3 incudes therein a position feedback loop and/or a speed (angular speed) feedback loop, and generates a control signal based on the target angle command and the target angular speed command included in the target command, and the current angle signal.

The driver 4 applies a control current (or a control voltage) to the controlled object 1 according to the control signal.

In this way, the controlled object 1 performs a desired operation such as a target tracking operation in an appropriate and stable manner.

Patent Literature 1: JP H05-079299 U

US 6 609 037 B1 relates to a hybrid stabilization system for isolating a pointing vector of a gimbal from the motion of a vehicle base.

### Summary of Invention

### Technical Problem

By the way, the controlled object 1 is disposed in a vehicle that moves.

Therefore, in order to control the controlled object more stably, it is desired to provide the target pointing apparatus, a target pointing method, and a target pointing control program with a spatial stabilization function for cancelling out the movement of the vehicle. This is solved by the independent claims. Dependent claims refer to preferred embodiments.

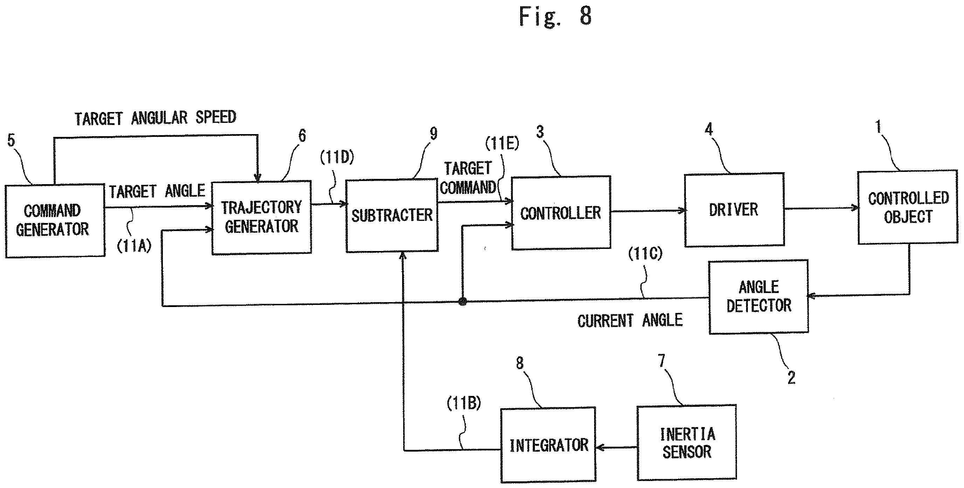

Fig. 8 is a block diagram in which the target pointing apparatus shown in Fig. 7 is provided with a spatial stabilization function.

In Fig. 8, an inertia sensor 7, an integrator 8, and a subtracter 9 are added.

The inertia sensor 7 detects a trembling angular speed of the vehicle.

The integrator 8 integrates the trembling angular speed and thereby converts it into a vehicle trembling angle, and then outputs the vehicle trembling angle to the subtracter.

The subtracter 9 is disposed between the trajectory generator 6 and the controller 3.

The subtracter 9 subtracts the vehicle trembling angle from the output of the trajectory generator 6 and outputs the subtraction result as a target command to the controller.

Note that since the output of the trajectory generator 6 includes the angle command and the angular speed command, there are two possible methods for the subtraction processing performed by the subtracter.

The subtracter 9 may perform subtraction processing between angle signals while supplying the angular speed command received from the trajectory generator 6 to the controller 3 without performing any processing thereon.

That is, the subtracter 9 performs subtraction processing between the angle command received from the trajectory generator 6 and the vehicle trembling angle received from the integrator, and supplies the subtraction result as a target angle command to the controller.

As for the angular speed command received from the trajectory generator 6, the subtracter 9 supplies the angular speed command as a target angular speed command to the controller 3 without performing any processing thereon.

Alternatively, the subtracter 9 operates as follows.

The subtracter 9 further includes therein a differentiator, and differentiates the vehicle trembling angle and thereby obtains a vehicle trembling angular speed.

Then, the subtracter 9 may perform subtraction processing between the angular speed command received from the trajectory generator 6 and the calculated vehicle trembling angular speed in addition to performing subtraction processing between the angle signals, and supply the subtraction result as a target angular speed command to the controller 3.

The inertia sensor 7, the integrator 8, and the subtracter 9 form a spatial stabilization loop.

Since the movement of the vehicle is cancelled out by the spatial stabilization loop, it is conceivable that spatial stabilization can be achieved.

However, the inventors of the present invention have found that, in reality, an appropriate operation cannot be achieved by the simple addition of the spatial stabilization loop alone.

Meanwhile, an example where a spatial stabilization function works ideally is shown before explaining the problem in the target pointing apparatus provided with the spatial stabilization function shown in Fig. 8.

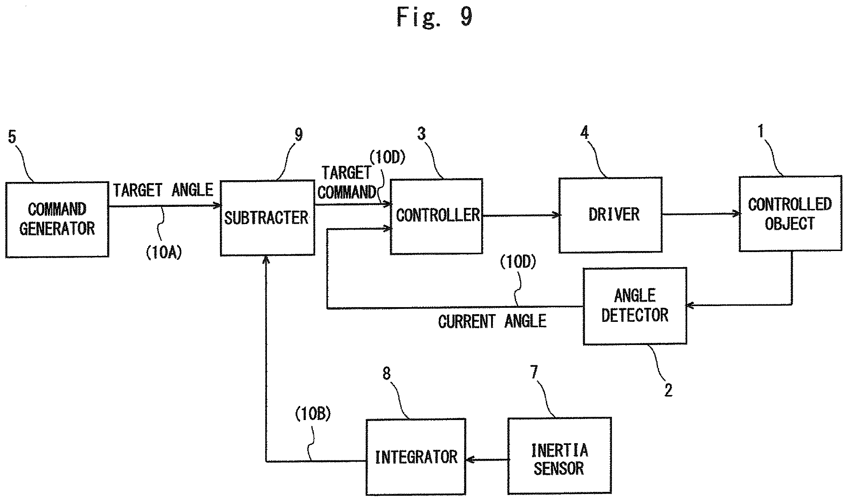

Therefore, firstly, an operation in a case where no trajectory generator is used as shown in Fig. 9 is explained.

Fig. 9 shows a configuration that is obtained by removing the trajectory generator from the block diagram shown in Fig. 8.

Figs. 10A to 10D show signal waveforms at the key points in the block diagram shown in Fig. 9.

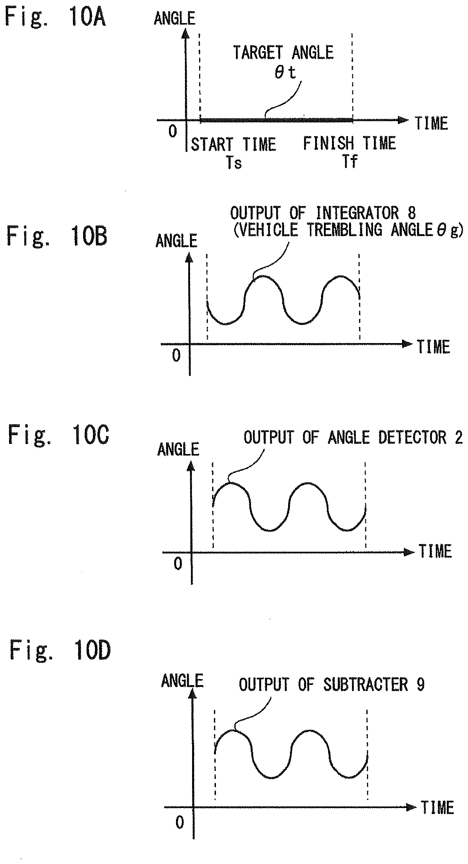

For easier correspondences among the figures, points at which waveforms shown in Figs. 10A-10D are obtained are indicated by parenthesized symbols in Fig. 9.

In Fig. 9, it is assumed that the command generator 5 continuously sets the target angle θt to zero (Fig. 10A).

Further, it is assumed that the vehicle is trembling and its trembling (vehicle trembling angle θg) is expressed by a -sin wave as shown in Fig. 10B.

In this state, when the vehicle trembling angle θg is subtracted from the target angle θt by the subtracter 9, the target commend for the controller 3 (output of the subtracter 9) has a sin waveform that is obtained by reversing the vehicle trembling angle θg as shown in Fig. 10D.

When the movement of the controlled object 1 has a sin waveform (Fig. 10C), it exactly cancels out the vehicle trembling angle θg, thus making it possible to achieve the spatial stabilization.

Now, an operation of the block diagram shown in Fig. 8 is examined hereinafter.

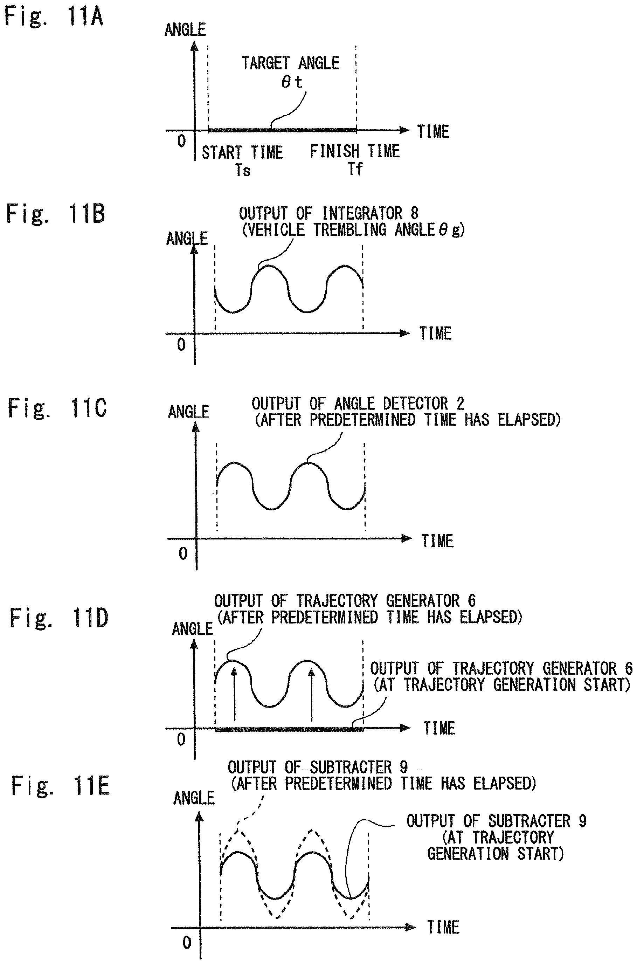

In Fig. 8, it is assumed that the command generator 5 continuously sets the target angle θt to zero (Fig. 11A).

Further, it is assumed that the vehicle is trembling and its trembling (vehicle trembling angle θg) is expressed by a -sin wave as shown in Fig. 11B.

In this state, when the vehicle trembling angle θg is subtracted from the target angle θt by the subtracter 9, the output of the subtracter 9 (the target commend for the controller 3) has a sin waveform that is obtained by reversing the vehicle trembling angle θg.

This waveform is represented by a solid line in Fig. 11E.

When the target command having this sin waveform is supplied to the controller 3, the vehicle trembling angle θg is cancelled out and the spatial stabilization of the controlled object is achieved as described above.

Here, the feedback to the trajectory generator 6 that is performed after a predetermined time has elapsed is examined.

As shown in Fig. 11C, when the controlled object 1 trembles in a sine waveform pattern, this movement of the controlled object is fed back to the trajectory generator 6 through the angle detector 2.

As a result, as shown in Fig. 11D, the output of the trajectory generator 6 (output related to the angle command) has a sine waveform.

The subtracter 9 subtracts a value equivalent to the vehicle trembling angle (Fig. 11B) from this output of the trajectory generator 6 (Fig. 11D).

However, as a result of this subtraction processing, the output of the subtracter 9 becomes a sine wave having an amplitude larger than necessary, instead of becoming a sine wave that exactly cancels out the trembling of the vehicle as represented by a dotted line in Fig. 11E.

Based on the above-described examination, it can be understood that it is difficult to properly carry out both the smooth operation by the trajectory generator and the spatial stabilization function at the same time in a simple manner.

The present invention has been made to solve the above-described problem and an object thereof is to provide a target pointing apparatus capable of performing spatial stabilization while performing trajectory generation.

### Solution to Problem

A target pointing apparatus according to the present invention is a target pointing apparatus that controls an object to be controlled according to a target, the object to be controlled being rotatably attached to a vehicle, the target pointing apparatus including:
command generation means for setting a target angle and a target angular speed;
trajectory generation means for generating a trajectory for the object to be controlled based on a current angle state of at least one of the object to be controlled and the vehicle, the target angle, and the target angular speed, and outputting an output angle signal and an output angular speed signal according to the trajectory, the current angle state being fed back to the trajectory generation means as a trajectory generation current angle;
angle detection means for detecting a current angle of the object to be controlled;
an inertia sensor disposed in the vehicle or the object to be controlled;
first subtraction means for subtracting a trembling angle component of the vehicle from the output angle signal;
a controller that generates a control signal based on an output of the first subtraction means and the current angle received from the angle detection means; and
a driver that controls driving of the object to be controlled based on the control signal received from the controller, in which
the trajectory generation current angle fed back to the trajectory generation means is a sum of a movement component of the vehicle and a movement component of the object to be controlled.

### Advantageous Effects of Invention

According to the present invention, it is possible to provide a target pointing apparatus capable of performing spatial stabilization while performing trajectory generation.

### Brief Description of Drawings

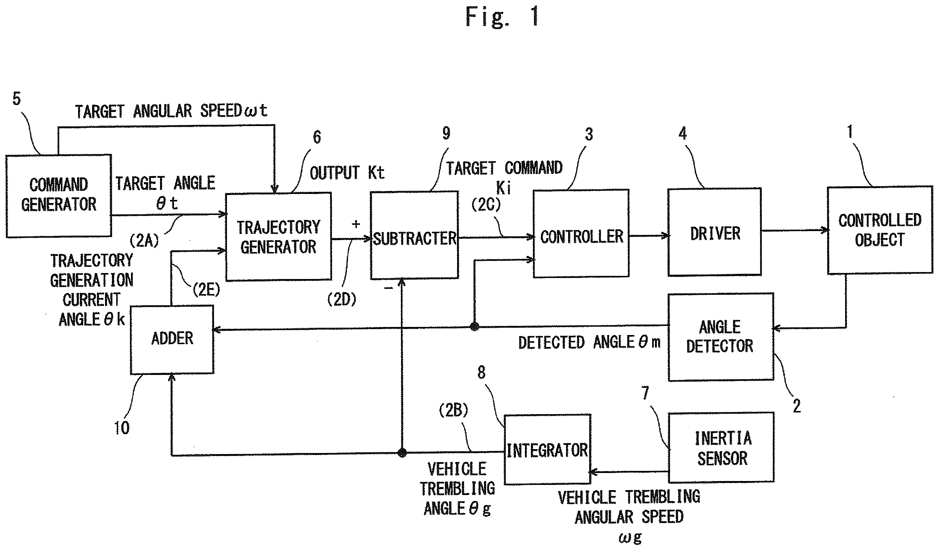

Fig. 1 is a block diagram showing a target pointing apparatus according to a first exemplary embodiment;

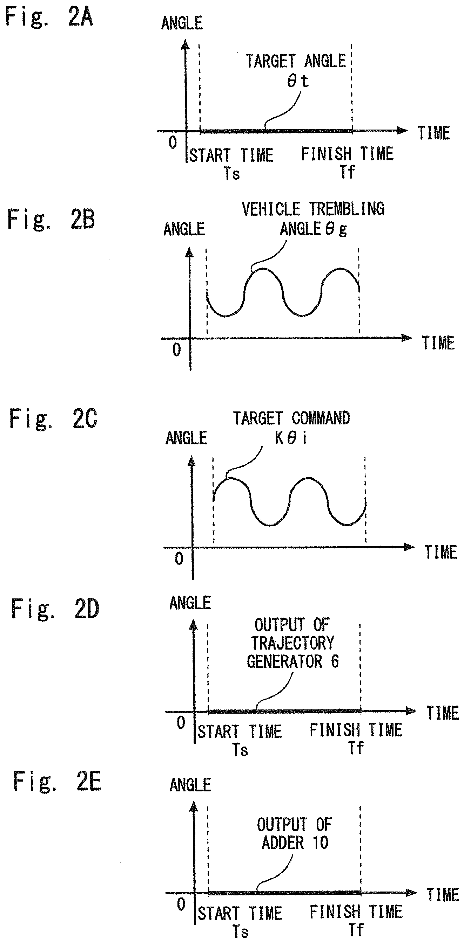

Fig. 2A is a waveform chart of a representative point in the target pointing apparatus according to the first exemplary embodiment;
Fig. 2B is a waveform chart of a representative point in the target pointing apparatus according to the first exemplary embodiment;
Fig. 2C is a waveform chart of a representative point in the target pointing apparatus according to the first exemplary embodiment;
Fig. 2D is a waveform chart of a representative point in the target pointing apparatus according to the first exemplary embodiment;
Fig. 2E is a waveform chart of a representative point in the target pointing apparatus according to the first exemplary embodiment;

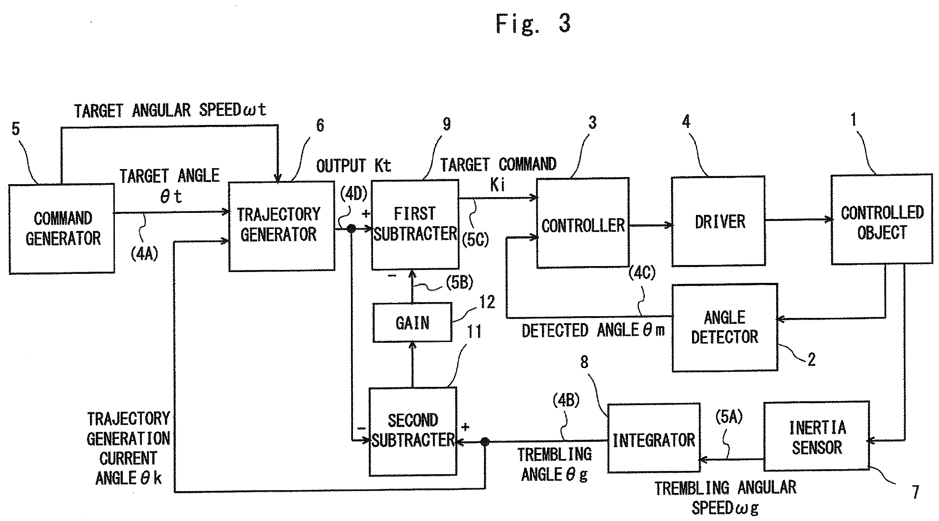

Fig. 3 is a block diagram showing a target pointing apparatus according to a second exemplary embodiment;

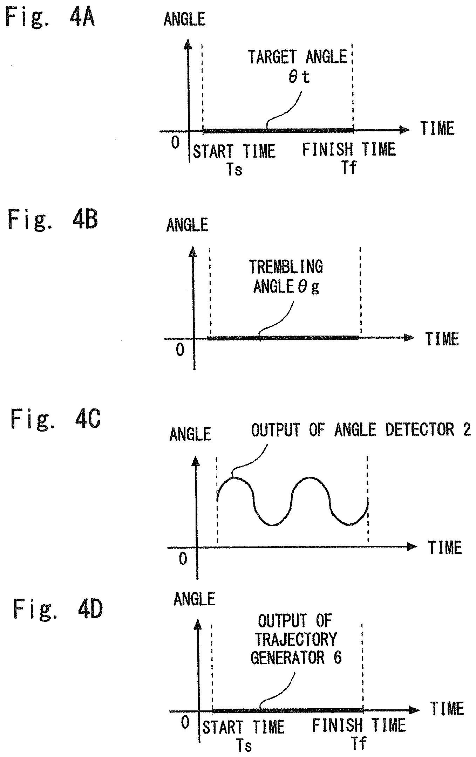

Fig. 4A is a waveform chart of a representative point in the target pointing apparatus according to the second exemplary embodiment;
Fig. 4B is a waveform chart of a representative point in the target pointing apparatus according to the second exemplary embodiment;
Fig. 4C is a waveform chart of a representative point in the target pointing apparatus according to the second exemplary embodiment;
Fig. 4D is a waveform chart of a representative point in the target pointing apparatus according to the second exemplary embodiment;

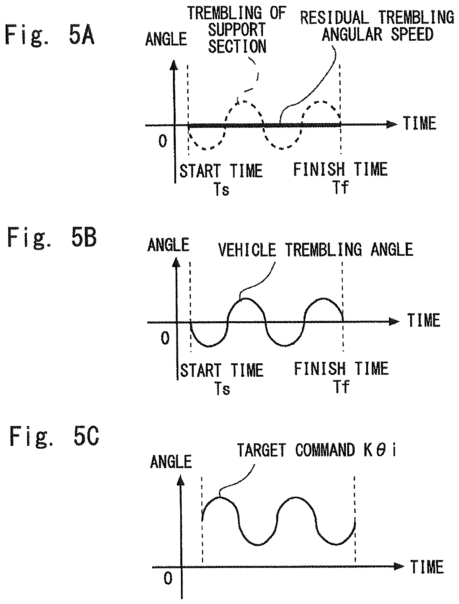

Fig. 5A is a waveform chart of a representative point in the target pointing apparatus according to the second exemplary embodiment;
Fig. 5B is a waveform chart of a representative point in the target pointing apparatus according to the second exemplary embodiment;
Fig. 5C is a waveform chart of a representative point in the target pointing apparatus according to the second exemplary embodiment;

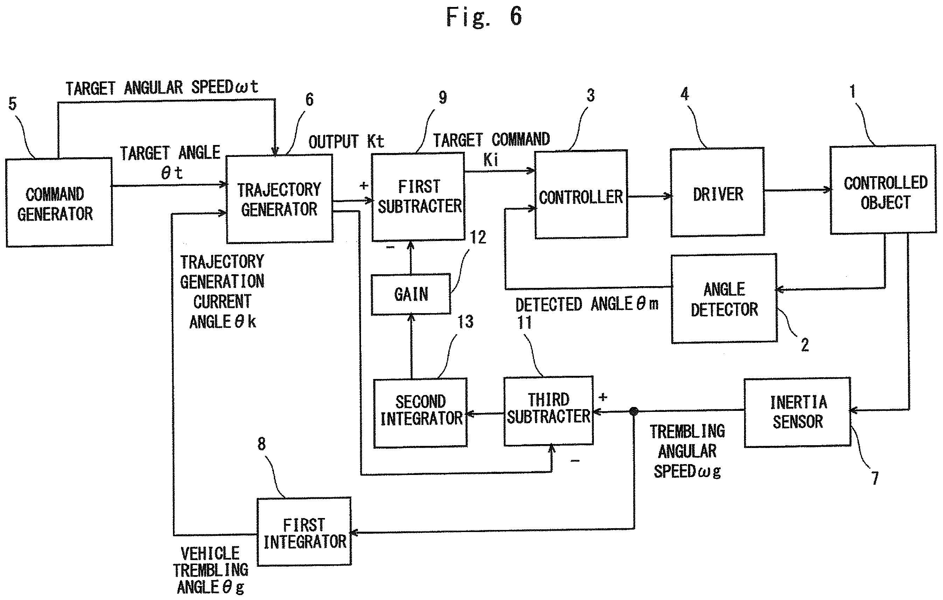

Fig. 6 is a block diagram showing a target pointing apparatus according to a third exemplary embodiment;
Fig. 7 is a block diagram showing a target pointing apparatus in related art;
Fig. 8 is a block diagram in which the target pointing apparatus in the related art is provided with a spatial stabilization function;
Fig. 9 is a block diagram showing a target pointing apparatus in related art;
Fig. 10A is a waveform chart of a representative point in the target pointing apparatus in the related art where no trajectory generator is used;
Fig. 10B is a waveform chart of a representative point in the target pointing apparatus in the related art where no trajectory generator is used;
Fig. 10C is a waveform chart of a representative point in the target pointing apparatus in the related art where no trajectory generator is used;
Fig. 10D is a waveform chart of a representative point in the target pointing apparatus in the related art where no trajectory generator is used;
Fig. 11A is a waveform chart of a representative point in the target pointing apparatus in the related art where a trajectory generator is used;
Fig. 11B is a waveform chart of a representative point in the target pointing apparatus in the related art where the trajectory generator is used;
Fig. 11C is a waveform chart of a representative point in the target pointing apparatus in the related art where the trajectory generator is used;
Fig. 11D is a waveform chart of a representative point in the target pointing apparatus in the related art where the trajectory generator is used; and
Fig. 11E is a waveform chart of a representative point in the target pointing apparatus in the related art where the trajectory generator is used.

### Description of Embodiments

### (First exemplary embodiment)

A target pointing apparatus according to a first exemplary embodiment is explained with reference to Fig. 1. Fig. 1 shows a block diagram showing an example of a target pointing apparatus according to the first exemplary embodiment.

The target pointing apparatus includes a support section (not shown), an object to be controlled 1 (hereinafter also referred to as "controlled object 1"), an angle detector 2, a controller 3, a driver 4, an inertia sensor 7, an integrator 8, a subtracter 9, an adder 10, a command generator 5, and a trajectory generator 6.

The support section supports the whole apparatus in order to attach the apparatus to a vehicle.

Further, the controlled object 1 is rotatably supported by the support section. Note that in this example, the degree of freedom is around one axis.

The angle detector 2 detects the rotation angle of the controlled object 1. The controller 3 performs a phase correction and the like as appropriate based on a detected angle θm output by the angle detector 2 and a target command Ki, and thereby generates a control signal for controlling the controlled object 1. The driver 4 drives the controlled object 1 based on the control signal. The target pointing apparatus is a feedback control type apparatus.

The inertia sensor 7 is fixed to and disposed in the support section, and detects a vehicle trembling angular speed ωg of the vehicle around the rotation axis of the controlled object 1.

The integrator 8 performs integral processing or the like on the vehicle trembling angular speed ωg and thereby converts it into a vehicle trembling angle θg.

The subtracter 9 subtracts the vehicle trembling angle θg from the angle trajectory generated by the trajectory generator 6 and thereby generates a target command signal. By the above-described components, a spatial stabilization loop for the target command Ki supplied to the controller 3 is added. The spatial stabilization loop can move the controlled object 1 so that the vehicle trembling angle θg is cancelled out and thereby perform spatial stabilization.

The adder 10 adds the detected angle θm, which is the output of the angle detector 2, to the vehicle trembling angle, which is the output of the integrator 8, and outputs a signal indicating this addition result as a trajectory generation current angle θk to the trajectory generator 6.

The command generator 5 sets a target angle θt and a target angular speed ωt and outputs a signal(s) indicating these target values as a target command Ki to the trajectory generator 6.

The trajectory generator 6 generates a target trajectory including a target angle trajectory Kθ and a target angular speed trajectory Kω based on the target angle θt, the target angular speed ωt, and the trajectory generation current angle θk.

The trajectory generator 6 outputs a signal Kt (including an angle command and an angular speed command) based on the target trajectory to the controller 3.

Note that the target angle trajectory Kθ is a process of changes of the angle θ at which the controlled object 1 should be pointed over time from the detected angle θm to the target angle θt.

Further, the target angular speed trajectory Kω is a process of changes of the angular speed ω at which the controlled object 1 should move over time for making the angle of the controlled object 1 follow the target angle trajectory Kθ. For example, even when the target angle θt is changed from the target angle θt to a new target angle θt1 during the process of driving the controlled object 1 toward the target angle θt, the trajectory generator 6 can correct the target angle trajectory Kθ and the target angular speed trajectory Kω and thereby generate a new target angle trajectory Kθ1 and a new target angular speed trajectory Kω1.

In this way, even when the target angle θt is changed, the controlled object 1 can be made to quickly track (i.e., follow) the target in a reliable manner.

### (Operation)

Next, an operation of the target pointing apparatus according to the first exemplary embodiment is explained with reference to Figs. 2A to 2E.

Figs. 2A to 2E show waveform charts of representative points in the target pointing apparatus according to the first exemplary embodiment.

Firstly, the command generator 5 sets a target angle θt to zero (see Fig. 2A).

Further, as shown in Fig. 2B, it is assumed that a vehicle trembling angle θg, which is the output of the integrator 8, changes in a -sin wave pattern.

At a start time ts, the vehicle trembling angle θg (see Fig. 2B) is zero and a detected angle θm, which is the output of the angle detector 2, is also zero.

As a result, the output of the adder 10 is zero at the start time ts as shown in Fig. 2E.

Since the target angle θt is zero, the output of the trajectory generator 6 (output related to the angle) is zero as shown in Fig. 2D.

The subtracter 9 subtracts the output of the integrator 8 from the output of the trajectory generator 6 (output related to the angle).

At this point, i.e., at the start time ts, since both the target angle θt and the output of the adder (Fig. 2E) are zero, the output of the subtracter 9 (output related to the angle) has a value that is obtained by reversing the polarity (i.e., plus and minus) of the vehicle trembling angle θg.

Therefore, the value that is obtained by reversing the polarity (i.e., plus and minus) of the vehicle trembling angle θg is supplied as a target command Ki to the controller 3.

The controlled object 1 performs an operation according to this command, i.e., a command that is obtained by reversing the polarity (i.e., plus and minus) of the vehicle trembling angle θg.

Note that the output of the adder 10 is a value that is obtained by adding the vehicle trembling angle θg (see Fig. 2B) to the detected angle θm (see Fig. 2C).

At the start time, since the controlled object 1 performs the operation according to the command obtained by reversing the polarity of the vehicle trembling angle θg, the output of the adder is zero.

When the output of the adder is zero, the output of the trajectory generator (output related to the angle) is also zero because the target angle θt is continuously set to zero.

When the trajectory generation current angle signal (output from the adder) supplied to the trajectory generator remains at zero as described above, the output of the adder becomes zero because the controlled object 1 is configured to operate so as to cancel out the trembling of the vehicle. As a result, as shown in Fig. 2D, the output of the trajectory generator 6 (output related to the angle) also becomes zero.

That is, the output of the trajectory generator 6 (output related to the angle) is continuously zero (see Fig. 2D). Therefore, the target command (target angle command) supplied to the controller 3 has a sin-wave pattern that is obtained by reversing the output of the integrator 8 (see Fig. 2B).

In this way, the controlled object 1 operates so as to cancel out the vehicle trembling angle θg, and therefore be able to perform spatial stabilization.

As described above, it can be understood that according to the first exemplary embodiment, it is possible to implement the trajectory generator 6 and the spatial stabilization function.

### (Second exemplary embodiment)

Next, a target pointing apparatus according to a second exemplary embodiment is explained with reference to Fig. 3.

Fig. 3 shows a block diagram showing an example of a target pointing apparatus according to the second exemplary embodiment.

Explanations of the same components/structures as those of the first exemplary embodiment are omitted and only the differences between this exemplary embodiment and the first exemplary embodiment are explained.

In this exemplary embodiment, the inertia sensor 7 is disposed in the controlled object 1, rather than in the support section, and detects trembling (acceleration) around the rotation axis of the controlled object 1.

The first subtracter 9 has the same function as that of the subtracter 9 included in the target pointing apparatus according to the first exemplary embodiment (see Fig. 1), but is named a different name. The target pointing apparatus according to the second exemplary embodiment has a configuration that is obtained by adding a second subtracter 11 and a gain 12 in the target pointing apparatus according to the first exemplary embodiment.

The integrator 8 integrates the output of the inertia sensor 7 and thereby converts it into an angle, and outputs the obtained angle to the trajectory generator 6 and the second subtracter 11.

The second subtracter 11 subtracts an angle signal received from the trajectory generator 6 from the output of the integrator 8.

The output of the second subtracter 11 is multiplied by a gain coefficient in the gain 12, and then supplied to the first subtracter 9.

The first subtracter 9 subtracts the output of the gain 12 from the angle signal received from the trajectory generator 6 and outputs the subtraction result as a target command Ki to the controller 3.

### (Operation)

Next, an operation of the target pointing apparatus according to the second exemplary embodiment is explained with reference to Figs. 4A-4D and 5A-5C.

Figs. 4A-4D and 5A-5C show waveform charts of representative points in the target pointing apparatus according to the second exemplary embodiment.

The command generator 5 sets a target angle to zero (see Fig. 4A).

The vehicle is trembling in an inertial space (see Fig. 5A).

The output of the inertia sensor 7 is processed through the integrator 8, the second subtracter 11, the gain 12, and the first subtracter 9, and output to the controller 3 as a target command Ki.

At a start time, the inertia sensor 7 detects the trembling in itself of the vehicle.

Therefore, the output of the first subtracter 9 (output related to the angle) has a signal pattern that is obtained by reversing the trembling of the vehicle in terms of the polarity (i.e., plus and minus).

The controller 3 outputs a control signal in accordance with the target command Ki to the driver 4.

Therefore, the controlled object 1 operates so as to cancel out the trembling of the vehicle.

At this point, the controlled object 1 can be a standstill in an inertial space. That is, spatial stabilization is being performed.

Then, in this state, the inertia sensor 7 disposed in the controlled object 1 detects a residual trembling angular speed.

Note that the residual trembling angular speed ωr is an angular speed that remains after the angular speed variations resulting from the trembling of the vehicle is reduced by the spatial stabilization. As shown in Fig. 5A, this residual trembling angular speed ωr has a value close to zero. The residual trembling angular speed ωr has a smaller value than that in the target pointing apparatus according to the first exemplary embodiment in which the inertia sensor 7 is fixed to and disposed in the support section.

As shown in Fig. 4B, an angle signal θg, which is the output of the integrator 8, has a value close to zero. Since the angle signal θg has a value close to zero and the target angle θt is zero, the output of the trajectory generator 6 is also zero as shown in Fig. 4D.

Meanwhile, the second subtracter 11 subtracts an angle signal received from the trajectory generator 6 from the angle signal θg and thereby removes the angular component of the controlled object 1 from the angle signal θg.

The gain 12 multiplies the output of the second subtracter 11 by a gain coefficient (Fig. 5B).

By doing so, the gain 12 obtains (or extracts) a value equivalent to an angle-converted value of the trembling angular speed of the vehicle from the angle signal θg.

The first subtracter 9 subtracts the output of the gain 12 from the angle signal received from the trajectory generator 6 and outputs the subtract result as the target command Ki to the controller 3 (see Fig. 5C).

In this way, the target pointing apparatus controls the rotation of the controlled object 1 according to the target command Ki and hence the output of the angle detector 2 changes in a sine-wave pattern as shown in Fig. 4C.

That is, when the spatial stabilization function is in an effective state, the value detected by the inertia sensor 7 is extremely small.

Then, by using the result obtained by integrating the output of the inertia sensor 7 for the trajectory generation current angle θk of the trajectory generator 6, the output of the trajectory generator 6 can be continuously adjusted to zero or a value close to zero and the vehicle trembling angle θg (see Fig. 5B) can be detected by the output of the gain 12. That is, it is possible to drive the controlled object 1 (Fig. 4C) so that the controlled object 1 operates (i.e., moves) in the direction opposite to the vehicle trembling angle θg (see Fig. 5B) and thereby cancel out the vehicle trembling angle θg. Therefore, it is possible to put the controlled object 1 in a standstill state in an inertial space and perform the spatial stabilization.

### (Third exemplary embodiment)

Next, a target pointing apparatus according to a third exemplary embodiment is explained with reference to Fig. 6.

Fig. 6 shows a block diagram showing an example of a target pointing apparatus according to the third exemplary embodiment.

Explanations of the same components/structures as those of the second exemplary embodiment are omitted and only the differences from the second exemplary embodiment are explained.

The first integrator 8 has the same function as that of the integrator 8 of the target pointing apparatus according to the second exemplary embodiment, but its name is changed.

The second subtracter 11 subtracts an angular speed signal received from the trajectory generator 6 from the output of the inertia sensor 7 and outputs the subtraction result to a second integrator 13.

This subtraction result corresponds to the vehicle trembling angular speed.

The second integrator 13 integrates the output of the second subtracter 11 and supplies the calculation result to the gain 12.

This integration result corresponds to the vehicle trembling angle θg.

Although the configurations of the target pointing apparatuses according to the second and third exemplary embodiments are different from each other, the signal supplied to the gain 12 corresponds to the vehicle trembling angle θg from which the effect of the angle trajectory is removed in both the second and third exemplary embodiments. Similarly to the target pointing apparatus according to the second exemplary embodiment, the target pointing apparatus according to the third exemplary embodiment can drive the controlled object 1 so that the controlled object 1 rotates in the direction opposite to the vehicle trembling angle θg and thereby cancel out the vehicle trembling angle θg. Therefore, it is possible to put the controlled object 1 in a standstill state in an inertial space and perform the spatial stabilization.

Note that it is assumed that the degree of freedom is around one axis in the above-described exemplary embodiments. However, the target pointing apparatus according to the exemplary embodiment is not limited to one axis. That is, even when there are a plurality of axes, the present invention can be applied by independently using a target pointing apparatus according to the exemplary embodiment for a respective one of the plurality of axes.

Further, it is assumed that an angle feedback control system is used in the above-described exemplary embodiments. However, the target pointing apparatus according to the exemplary embodiment is not limited to the angle feedback control system. That is, the target pointing apparatus according to the exemplary embodiment can be applied to any kind of control systems, provided that an angle can be detected and an angle or/and an angular speed is used as a target command in the control system.

### Industrial Applicability

The present invention is not limited to the above-described exemplary embodiments. That is, the present invention can be easily applied to cases where a target pointing apparatus capable of generating a target trajectory in a movable object to be controlled is further provided with a spatial stabilization function.

### Reference Signs List

- 1: CONTROLLED OBJECT
- 2: ANGLE DETECTOR
- 3: CONTROLLER
- 4: DRIVER
- 5: COMMAND GENERATOR
- 6: TRAJECTORY GENERATOR
- 7: INERTIA SENSOR
- 8: INTEGRATOR
- 9: SUBTRACTER
- 10: ADDER

## Claims

1. A target pointing apparatus that controls an object (1) to be controlled according to a target, the object (1) to be controlled being rotatably attached to a vehicle, the target pointing apparatus comprising:
command generation means (5) for setting a target angle and a target angular speed;
trajectory generation means (6) for generating a trajectory for the object (1) to be controlled based on the target angle, the target angular speed, and a trajectory generation current angle and outputting an output angle signal and an output angular speed signal according to the trajectory, a current angle state of the object (1) to be controlled or the sum of an angle state of the object (1) to be controlled and an angle state of the vehicle being fed back to the trajectory generation means (6) as the trajectory generation current angle;
angle detection means (2) for detecting a current angle of the object (1) to be controlled;
an inertia sensor (7) disposed in the vehicle or the object (1) to be controlled;
first subtraction means (9) for subtracting a trembling angle component of the vehicle from the output angle signal;
a controller (3) that generates a control signal based on an output of the first subtraction means (9) and the current angle received from the angle detection means (2); and
a driver (4) that controls driving of the object (1) to be controlled based on the control signal received from the controller (3).

2. The target pointing apparatus according to Claim 1, wherein
the inertia sensor (7) is disposed in the vehicle,
the trajectory generation current angle is the sum of an angle state of the object (1) to be controlled and an angle state of the vehicle, and hence is substantially zero.

3. The target pointing apparatus according to Claim 1 or 2, wherein
the inertia sensor (7) is disposed in the vehicle,
the target pointing apparatus further comprises:
integration means (8) for integrating an angular speed value detected by the inertia sensor (7) and thereby calculating a trembling angle component of the vehicle; and
addition means (10) for adding an integration value obtained by the integration means (8) to the current angle detected by the angle detection means (2),
the trembling angle component of the vehicle calculated by the integration means (8) is input to the first subtraction means (9), and
an addition value obtained by the addition means (10) is fed back to the trajectory generation means (6) as the trajectory generation current angle.

4. The target pointing apparatus according to Claim 1, wherein
the inertia sensor (7) is disposed in the object (1) to be controlled,
the trajectory generation current angle is the current angle state of the object (1) to be controlled,
the target pointing apparatus further comprises:
integration means (8) for integrating an angular speed value detected by the inertia sensor (7) and thereby obtaining an angle component; and
second subtraction means (11) for subtracting the output angle signal received from the trajectory generation means (6) from the angle component and thereby obtaining a trembling angle component of the vehicle,
the trembling angle component of the vehicle obtained by the second subtraction means (11) is input to the first subtraction means (9), and
the angle component calculated by the integration means (8) is fed back to the trajectory generation means (6) as the trajectory generation current angle.

5. The target pointing apparatus according to Claim 4, wherein the output of the second subtraction means (11) is multiplied by a predetermined gain and the obtained value is used as a value corresponding to a trembling angle of the vehicle.

6. The target pointing apparatus according to Claim 1, wherein
the inertia sensor (7) is disposed in the object (1) to be controlled,
the trajectory generation current angle is the current angle state of the object (1) to be controlled,
the target pointing apparatus further comprises:
integration means (8) for integrating an angular speed value detected by the inertia sensor (7) and thereby obtaining an angle component;
third subtraction means for subtracting the output angular speed signal received from the trajectory generation means (6) from the angular speed value detected by the inertia sensor (7) and thereby obtaining a trembling angular speed component of the vehicle; and
second integration means (13) for integrating the trembling angular speed component obtained by the third subtraction means and thereby calculating a trembling angle component of the vehicle,
the trembling angle component of the vehicle calculated by the second integration means (13) is input to the first subtraction means (9), and
the angle component calculated by the integration means (8) is fed back to the trajectory generation means (6) as the trajectory generation current angle.

7. The target pointing apparatus according to Claim 6, wherein the angle component calculated by the second integration means (13) is multiplied by a predetermined gain and the obtained value is used as a value corresponding to a trembling angle of the vehicle.

8. A target pointing method for controlling an object (1) to be controlled according to a target, the object (1) to be controlled being rotatably attached to a vehicle, the target pointing method comprising:
setting a target angle and a target angular speed;
feeding back a current angle state of the object (1) to be controlled or the sum of an angle state of the object to be controlled and an angle state of the vehicle as a trajectory generation current angle, generating a trajectory for the object (1) to be controlled based on the trajectory generation current angle, the target angle, and the target angular speed, and outputting an output angle signal and an output angular speed signal according to the trajectory;
detecting a current angle of the object (1) to be controlled;
detecting, by an inertia sensor (7) disposed in the vehicle or the object (1) to be controlled, a trembling angular speed;
subtracting a trembling angle component of the vehicle from the output angle signal, generating a control signal based on this subtraction result and the current angle, and controlling driving of the object (1) to be controlled based on the control signal.

9. A non-transitory computer readable media, in which a computer is embedded in a target pointing apparatus, the target pointing apparatus comprising: an object (1) to be controlled, the object (1) to be controlled being rotatably attached to a vehicle; angle detection means (2) for detecting a current angle of the object (1) to be controlled; and an inertia sensor (7) disposed in the vehicle or the object (1) to be controlled, the target pointing apparatus being configured to control the object (1) to be controlled according to a target,
wherein the computer is made to operate as:
command generation means (5) for setting a target angle and a target angular speed;
trajectory generation means (6) for generating a trajectory for the object (1) to be controlled based on the target angle, the target angular speed, and a trajectory generation current angle, and outputting an output angle signal and an output angular speed signal according to the trajectory, a current angle state of the object to be controlled or the sum of an angle state of the object to be controlled and an angle state of the vehicle being fed back to the trajectory generation means (6) as the trajectory generation current angle;
first subtraction means (9) for subtracting a trembling angle component of the vehicle from the output angle signal; and
a controller (3) that generates a control signal based on an output of the first subtraction means (9) and the current angle received from the angle detection means (2).

## Patentansprüche

1. Zielanzeigevorrichtung, die ein zu steuerndes Objekt (1) gemäß einem Ziel steuert, wobei das zu steuernde Objekt (1) drehbar an einem Fahrzeug befestigt ist, wobei die Zielanzeigevorrichtung aufweist:
eine Befehlserzeugungseinrichtung (5) zum Setzen eines Zielwinkels und einer Zielwinkelgeschwindigkeit;
eine Trajektorienerzeugungseinrichtung (6) zum Erzeugen einer Trajektorie für das zu steuernde Objekt (1) basierend auf dem Zielwinkel, der Zielwinkelgeschwindigkeit und einem aktuellen Trajektorienerzeugungswinkel und zum Ausgeben eines Ausgabewinkelsignals und eines Ausgabewinkelgeschwindigkeitssignals gemäß der Trajektorie, eines aktuellen Winkelzustands des zu steuernden Objekts (1) oder der Summe aus einem Winkelzustand des zu steuernden Objekts (1) und einem Winkelzustand des Fahrzeugs, die als der aktuelle Trajektorienerzeugungswinkel zur Trajektorienerzeugungseinrichtung (6) zurückgekoppelt werden;
eine Winkelerfassungseinrichtung (2) zum Erfassen eines aktuellen Winkels des zu steuernden Objekts (1);
einen Trägheitssensor (7), der im Fahrzeug oder im zu steuernden Objekt (1) angeordnet ist;
eine erste Subtrahiereinrichtung (9) zum Subtrahieren einer Erschütterungswinkelkomponente des Fahrzeugs vom Ausgabewinkelsignal;
eine Steuereinheit (3), die ein Steuersignal basierend auf einer Ausgabe der ersten Subtrahiereinrichtung (9) und dem von der Winkelerfassungseinrichtung (2) empfangenen aktuellen Winkel erzeugt; und
eine Antriebseinrichtung (4), die den Antrieb des zu steuernden Objekts (1) basierend auf dem von der Steuereinheit (3) empfangenen Steuersignal steuert.

2. Zielanzeigevorrichtung nach Anspruch 1, wobei
der Trägheitssensor (7) im Fahrzeug angeordnet ist, und
der aktuelle Trajektorienerzeugungswinkel die Summe aus einem Winkelzustand des zu steuernden Objekts (1) und einem Winkelzustand des Fahrzeugs ist und damit im wesentlichen Null beträgt.

3. Zielanzeigevorrichtung nach Anspruch 1 oder 2, wobei
der Trägheitssensor (7) im Fahrzeug angeordnet ist,
wobei die Zielanzeigevorrichtung ferner aufweist:
eine Integriereinrichtung (8) zum Integrieren eines durch den Trägheitssensor (7) erfassten Winkelgeschwindigkeitswerts und zum Berechnen einer Erschütterungswinkelkomponente des Fahrzeugs basierend darauf; und
eine Addiereinrichtung (10) zum Addieren eines durch die Integriereinrichtung (8) erhaltenen Integrationswerts zum durch die Winkelerfassungseinrichtung (2) erfassten aktuellen Winkel,
wobei die durch die Integriereinrichtung (8) berechnete Erschütterungswinkelkomponente des Fahrzeugs der ersten Subtrahiereinrichtung (9) zugeführt wird, und
ein durch die Addiereinrichtung (10) erhaltener Additionswert als der aktuelle Trajektorienerzeugungswinkel zur Trajektorienerzeugungseinrichtung (6) zurückgekoppelt wird.

4. Zielanzeigevorrichtung nach Anspruch 1, wobei
der Trägheitssensor (7) in dem zu steuernden Objekt (1) angeordnet ist,
der aktuelle Trajektorienerzeugungswinkel der aktuelle Winkelzustand des zu steuernden Objekts (1) ist,
die Zielanzeigevorrichtung ferner aufweist:
eine Integriereinrichtung (8) zum Integrieren eines durch den Trägheitssensor (7) erfassten Winkelgeschwindigkeitswerts, um dadurch eine Winkelkomponente zu erhalten; und
eine zweite Subtrahiereinrichtung (11) zum Subtrahieren des von der Trajektorienerzeugungseinrichtung (6) empfangenen Ausgabewinkelsignals von der Winkelkomponente, um dadurch eine Erschütterungswinkelkomponente des Fahrzeugs zu erhalten,
wobei die durch die zweite Subtrahiereinrichtung (11) erhaltene Erschütterungswinkelkomponente des Fahrzeugs der ersten Subtrahiereinrichtung (9) zugeführt wird, und
wobei die durch die Integriereinrichtung (8) berechnete Winkelkomponente als der aktuelle Trajektorienerzeugungswinkel zur Trajektorienerzeugungseinrichtung (6) zurückgekoppelt wird.

5. Zielanzeigevorrichtung nach Anspruch 4, wobei die Ausgabe der zweiten Subtrahiereinrichtung (11) mit einem vorgegebenen Verstärkungsgrad multipliziert wird und der erhaltene Wert als ein einem Erschütterungswinkel des Fahrzeugs entsprechender Wert verwendet wird.

6. Zielanzeigevorrichtung nach Anspruch 1, wobei
der Trägheitssensor (7) in dem zu steuernden Objekt (1) angeordnet ist,
der aktuelle Trajektorienerzeugungswinkel der aktuelle Winkelzustand des zu steuernden Objekts (1) ist,
die Zielanzeigevorrichtung ferner aufweist:
eine Integriereinrichtung (8) zum Integrieren eines durch den Trägheitssensor (7) erfassten Winkelgeschwindigkeitswerts, um eine Winkelkomponente zu erhalten;
eine dritte Subtrahiereinrichtung zum Subtrahieren des von der Trajektorienerzeugungseinrichtung (6) empfangenen Ausgabewinkelgeschwindigkeitssignals von dem durch den Trägheitssensor (7) erfassten Winkelgeschwindigkeitswert, um eine Erschütterungswinkelgeschwindigkeitskomponente des Fahrzeugs zu erhalten; und
eine zweite Integriereinrichtung (13) zum Integrieren der durch die dritte Subtrahiereinrichtung erhaltenen Erschütterungswinkelgeschwindigkeitskomponente, um eine Erschütterungswinkelkomponente des Fahrzeugs zu berechnen,
wobei die durch die zweite Integriereinrichtung (13) berechnete Erschütterungswinkelkomponente des Fahrzeugs der ersten Subtrahiereinrichtung (9) zugeführt wird, und
die durch die Integriereinrichtung (8) berechnete Winkelkomponente als der aktuelle Trajektorienerzeugungswinkel zur Trajektorienerzeugungseinrichtung (6) zurückgekoppelt wird.

7. Zielanzeigevorrichtung nach Anspruch 6, wobei die durch die zweite Integriereinrichtung (13) berechnete Winkelkomponente mit einem vorgegebenen Verstärkungsfaktor multipliziert wird und der erhaltene Wert als ein einem Erschütterungswinkel des Fahrzeugs entsprechender Wert verwendet wird.

8. Zielanzeigeverfahren zum Steuern eines zu steuernden Objekts (1) gemäß einem Ziel, wobei das zu steuernde Objekt (1) drehbar an einem Fahrzeug befestigt ist, wobei das Zielanzeigeverfahren die Schritte aufweist:
Setzen eines Zielwinkels und einer Zielwinkelgeschwindigkeit;
Zurückkoppeln eines aktuellen Winkelzustands des zu steuernden Objekts (1) oder der Summe aus einem Winkelzustand des zu steuernden Objekts und einem Winkelzustand des Fahrzeugs als ein aktueller Trajektorienerzeugungswinkel, Erzeugen einer Trajektorie für das zu steuernde Objekt (1) basierend auf dem aktuellen Trajektorienerzeugungswinkel, dem Zielwinkel und der Zielwinkelgeschwindigkeit und Ausgeben eines Ausgabewinkelsignals und eines Ausgabewinkelgeschwindigkeitssignals gemäß der Trajektorie;
Erfassen eines aktuellen Winkels des zu steuernden Objekts (1);
Erfassen einer Erschütterungswinkelgeschwindigkeit durch einen Trägheitssensor (7), der im Fahrzeug oder im zu steuernden Objekt (1) angeordnet ist; und
Subtrahieren einer Erschütterungswinkelkomponente des Fahrzeugs von dem Ausgabewinkelsignal, Erzeugen eines Steuersignals basierend auf diesem Subtraktionsergebnis und dem aktuellen Winkel und Steuern eines Antriebs des zu steuernden Objekts (1) basierend auf dem Steuersignal.

9. Nichtflüchtiges computerlesbares Medium für einen Computer, der in einer Zielanzeigevorrichtung eingebettet ist, wobei die Zielanzeigevorrichtung aufweist: ein zu steuerndes Objekt (1), wobei das zu steuernde Objekt (1) drehbar an einem Fahrzeug befestigt ist; eine Winkelerfassungseinrichtung (2) zum Erfassen eines aktuellen Winkels des zu steuernden Objekts (1); und einen Trägheitssensor (7), der im Fahrzeug oder im zu steuernden Objekt (1) angeordnet ist, wobei die Zielanzeigevorrichtung dafür konfiguriert ist, das zu steuernde Objekt (1) gemäß einem Ziel zu steuern,
wobei der Computer betreibbar ist als:
Befehlserzeugungseinrichtung (5) zum Setzen eines Zielwinkels und einer Zielwinkelgeschwindigkeit;
Trajektorienerzeugungseinrichtung (6) zum Erzeugen einer Trajektorie für das zu steuernde Objekt (1) basierend auf dem Zielwinkel, der Zielwinkelgeschwindigkeit und einem aktuellen Trajektorienerzeugungswinkel und zum Ausgeben eines Ausgabewinkelsignals und eines Ausgabewinkelgeschwindigkeitssignals gemäß der Trajektorie, einem aktuellen Winkelzustand des zu steuernden Objekts oder der Summe aus einem Winkelzustand des zu steuernden Objekts und einem Winkelzustand des Fahrzeugs, die als der aktuelle Trajektorienerzeugungswinkel zur Trajektorienerzeugungseinrichtung (6) zurückgekoppelt werden;
erste Subtrahiereinrichtung (9) zum Subtrahieren einer Erschütterungswinkelkomponente des Fahrzeugs vom Ausgabewinkelsignal; und
eine Steuereinheit (3), die ein Steuersignal basierend auf einer Ausgabe der ersten Subtrahiereinrichtung (9) und dem von der Winkelerfassungseinrichtung (2) empfangenen aktuellen Winkel erzeugt.

## Revendications

1. Appareil de pointage de cible qui commande un objet (1) devant être commandé selon une cible, l'objet (1) devant être commandé étant fixé de manière rotative à un véhicule, l'appareil de pointage de cible comprenant :
un moyen de génération d'instruction (5) pour régler un angle de cible et une vitesse angulaire de cible ;
un moyen de génération de trajectoire (6) pour générer une trajectoire pour l'objet (1) devant être commandé, sur la base de l'angle de cible, de la vitesse angulaire de cible et d'un angle en cours de génération de trajectoire, et pour fournir en sortie un signal d'angle de sortie et un signal de vitesse angulaire de sortie selon la trajectoire, un état d'angle en cours de l'objet (1) devant être commandé, ou la somme de l'état d'angle de l'objet (1) devant être commandé et d'un état d'angle du véhicule qui est renvoyé au moyen de génération de trajectoire (6), en tant que l'angle en cours de génération de trajectoire ;
un moyen de détection d'angle (2) pour détecter un angle en cours de l'objet (1) devant être commandé ;
un capteur d'inertie (7) disposé dans le véhicule ou dans l'objet (1) devant être commandé ;
un premier moyen de soustraction (9) pour soustraire, du signal d'angle de sortie, une composante d'angle de tremblement du véhicule ;
un contrôleur (3) qui génère un signal de commande sur la base d'une sortie du premier moyen de soustraction (9) et de l'angle en cours reçu en provenance du moyen de détection d'angle (2) ; et
un pilote (4) qui commande le pilotage de l'objet (1) devant être commandé, sur la base du signal de commande reçu en provenance du contrôleur (3).

2. Appareil de pointage de cible selon la revendication 1, dans lequel :
le capteur d'inertie (7) est disposé dans le véhicule ; et
l'angle en cours de génération de trajectoire correspond à la somme d'un état d'angle de l'objet (1) devant être commandé et d'un état d'angle du véhicule, et est par conséquent sensiblement nul.

3. Appareil de pointage de cible selon la revendication 1 ou 2, dans lequel :
le capteur d'inertie (7) est disposé dans le véhicule ; et
l'appareil de pointage de cible comprend en outre :
un moyen d'intégration (8) pour intégrer une valeur de vitesse angulaire détectée par le capteur d'inertie (7) et calculer par conséquent une composante d'angle de tremblement du véhicule ; et
un moyen d'ajout (10) pour ajouter une valeur d'intégration, obtenue par le moyen d'intégration (8), à l'angle en cours détecté par le moyen de détection d'angle (2) ;
dans lequel la composante d'angle de tremblement du véhicule, calculée par le moyen d'intégration (8), est appliquée au premier moyen de soustraction (9) ; et
dans lequel une valeur d'ajout obtenue par le moyen d'ajout (10) est renvoyée au moyen de génération de trajectoire (6) en tant que l'angle en cours de génération de trajectoire.

4. Appareil de pointage de cible selon la revendication 1, dans lequel :
le capteur d'inertie (7) est disposé dans l'objet (1) devant être commandé ;
l'angle en cours de génération de trajectoire correspond à l'état d'angle en cours de l'objet (1) devant être commandé ;
l'appareil de pointage de cible comprend en outre :
un moyen d'intégration (8) pour intégrer une valeur de vitesse angulaire détectée par le capteur d'inertie (7), et obtenir par conséquent une composante d'angle ; et
un deuxième moyen de soustraction (11) pour soustraire, de la composante d'angle, le signal d'angle de sortie reçu en provenance du moyen de génération de trajectoire (6), et obtenir par conséquent une composante d'angle de tremblement du véhicule ;
dans lequel la composante d'angle de tremblement du véhicule, obtenue par le deuxième moyen de soustraction (11), est appliquée en entrée dans le premier moyen de soustraction (9) ; et
dans lequel la composante d'angle calculée par le moyen d'intégration (8) est renvoyée au moyen de génération de trajectoire (6) en tant que l'angle en cours de génération de trajectoire.

5. Appareil de pointage de cible selon la revendication 4, dans lequel la sortie du deuxième moyen de soustraction (11) est multipliée par un gain prédéterminé et la valeur obtenue est utilisée en tant qu'une valeur correspondant à un angle de tremblement du véhicule.

6. Appareil de pointage de cible selon la revendication 1, dans lequel :
le capteur d'inertie (7) est disposé dans l'objet (1) devant être commandé ;
l'angle en cours de génération de trajectoire correspond à l'angle en cours de l'objet (1) devant être commandé,
l'appareil de pointage de cible comprend en outre :
un moyen d'intégration (8) pour intégrer une valeur de vitesse angulaire détectée par le capteur d'inertie (7), et obtenir par conséquent une composante d'angle ;
un troisième moyen de soustraction pour soustraire, de la valeur de vitesse angulaire détectée par le capteur d'inertie (7), le signal de vitesse angulaire de sortie reçu en provenance du moyen de génération de trajectoire (6), et obtenir par conséquent une composante de vitesse angulaire de tremblement du véhicule ; et
un second moyen d'intégration (13) pour intégrer la composante de vitesse angulaire de tremblement obtenue par le troisième moyen de soustraction et calculer par conséquent une composante d'angle de tremblement du véhicule ;
dans lequel la composante d'angle de tremblement du véhicule, calculée par le second moyen d'intégration (13), est appliquée en entrée dans le premier moyen de soustraction (9) ; et
la composante d'angle calculée par le moyen d'intégration (8) est renvoyée au moyen de génération de trajectoire (6) en tant qu'angle en cours de génération de trajectoire.

7. Appareil de pointage de cible selon la revendication 6, dans lequel la composante d'angle calculée par le second moyen d'intégration (13) est multipliée par un gain prédéterminé, et la valeur obtenue est utilisée en tant qu'une valeur correspondant à un angle de tremblement du véhicule.

8. Procédé de pointage de cible pour commander un objet (1) devant être commandé, selon une cible, l'objet (1) devant être commandé étant fixé de manière rotative à un véhicule, le procédé de pointage de cible comprenant les étapes ci-dessous consistant à :
définir un angle de cible et une vitesse angulaire de cible ;
renvoyer un état d'angle en cours de l'objet (1) devant être commandé, ou la somme d'un état d'angle de l'objet devant être commandé et d'un état d'angle du véhicule, en tant qu'une angle en cours de génération de trajectoire, générer une trajectoire pour l'objet (1) devant être commandé, sur la base de l'angle en cours de génération de trajectoire, de l'angle de cible et de la vitesse angulaire de cible, et fournir en sortie un signal d'angle de sortie et un signal de vitesse angulaire de sortie selon la trajectoire ;
détecter un angle en cours de l'objet (1) devant être commandé ;
détecter, par le biais d'un capteur d'inertie (7) disposé dans le véhicule ou dans l'objet (1) devant être commandé, une vitesse angulaire de tremblement ;
soustraire, du signal d'angle de sortie, une composante d'angle de tremblement du véhicule, générer un signal de commande sur la base dudit résultat de soustraction et de l'angle en cours, et commander le pilotage de l'objet (1) devant être commandé sur la base du signal de commande.

9. Support non transitoire lisible par ordinateur, dans lequel un ordinateur est intégré dans un appareil de pointage de cible, l'appareil de pointage de cible comprenant : un objet (1) devant être commandé, l'objet (1) devant être commandé étant fixé de manière rotative à un véhicule ; un moyen de détection d'angle (2) pour détecter un angle en cours de l'objet (1) devant être commandé ; et un capteur d'inertie (7) disposé dans le véhicule ou dans l'objet (1) devant être commandé, l'appareil de pointage de cible étant configuré de manière à commander l'objet (1) devant être commandé selon une cible ;
dans lequel l'ordinateur est conçu en vue de fonctionner en tant que :
un moyen de génération d'instruction (5) pour définir un angle de cible et une vitesse angulaire de cible ;
un moyen de génération de trajectoire (6) pour générer une trajectoire pour l'objet (1) devant être commandé, sur la base de l'angle de cible, de la vitesse angulaire de cible et d'un angle en cours de génération de trajectoire, et fournir en sortie un signal d'angle de sortie et un signal de vitesse angulaire de sortie selon la trajectoire, un état d'angle en cours de l'objet devant être commandé ou la somme d'un état d'angle de l'objet devant être commandé et d'un état d'angle du véhicule, renvoyé (e) au moyen de génération de trajectoire (6), en tant que l'angle en cours de génération de trajectoire ;
un premier moyen de soustraction (9) pour soustraire, du signal d'angle de sortie, une composante d'angle de tremblement du véhicule ; et
un contrôleur (3) qui génère un signal de commande sur la base d'une sortie du premier moyen de soustraction (9) et de l'angle en cours reçu en provenance du moyen de détection d'angle (2).
